(19) Europäisches Patentamt
European Patent Office
Office européen des brevets

(11) **EP 4 177 319 A1**

(12) **EUROPEAN PATENT APPLICATION**

(43) Date of publication:
**10.05.2023 Bulletin 2023/19**

(21) Application number: **21207006.4**

(22) Date of filing: **08.11.2021**

(51) International Patent Classification (IPC):
***C09D 11/36*** (2014.01)   ***C09D 11/322*** (2014.01)
***C09D 11/10*** (2014.01)

(52) Cooperative Patent Classification (CPC):
**C09D 11/36; C09D 11/10; C09D 11/322**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dover Europe Sàrl
1214 Vernier (CH)**

(72) Inventors:
• **HERAULT, Nelly
86160 LA FERRIERE-AIROUX (FR)**

• **BODINO, Frédéric
1000 LAUSANNE 26 (CH)**

(74) Representative: **Brevalex
56, Boulevard de l'Embouchure
B.P. 27519
31075 Toulouse Cedex 2 (FR)**

Remarks:
A request for correction of description and claims has been filed pursuant to Rule 139 EPC. A decision on the request will be taken during the proceedings before the Examining Division (Guidelines for Examination in the EPO, A-V, 3.).

(54) **NON AQUEOUS INK JET INK COMPOSITION COMPRISING CORE-SHELL PIGMENT PARTICLES OR POROUS PIGMENT PARTICLES**

(57)    A non-aqueous opaque ink composition for the continuous deflected ink jet ("*CIJ*") printing technique, liquid at room temperature, comprising:
a) a solvent;
b) white pigment particles,
c) a binder, comprising one or more binding resin(s);
d) a dispersant;
wherein:
- the solvent consists of one or more organic solvent compound(s);
- the white pigment particles are core shell and/or porous white pigment particles, each particle having a density lower than the density of a nonporous (solid), coreless white pigment particle.

Method for marking a substrate by spraying said opaque ink jet ink composition onto this substrate, and substrate provided with a marking obtained by drying and/or absorption of said ink composition.

FIG.1

EP 4 177 319 A1

**Description**

**TECHNICAL FIELD**

The present invention relates to a non-aqueous ink jet ink composition comprising core-shell pigment particles or porous pigment particles.

More precisely, the present invention relates to a non-aqueous ink jet ink composition comprising white pigment particles which are core shell and/or porous white pigment particles, each particle having a density lower than the density of a non-porous, coreless white pigment particle. In particular, the present invention relates to a white pigmented non-aqueous ink jet ink composition comprising core shell white pigment particles, such as titanium dioxide particles, each comprising at least one core particle and a shell consisting of a white pigment, such as titanium dioxide ($TiO_2$).

In particular, the present invention also relates to a white pigmented non-aqueous inkjet ink composition comprising porous white pigment particles, such as porous titanium dioxide particles.

The ink composition according to the invention is especially suitable for marking, printing with the deflected continuous ink jet ("CIJ") printing technique.

The properties of the ink composition according to the invention are particularly suitable for ink jet marking or printing on a very wide variety of supports, substrates and objects, and particularly on flexible supports, substrates and objects.

The ink composition according to the invention is notably suitable for marking substrates, supports, and objects made of organic polymers, in particular made of thermoplastic polymers (« plastic materials »), such as polyolefins like polyethylenes (PE) or polypropylenes (PP), polyethylene terephthalates (PET) or polyvinylchlorides (PVC), or made of metals such as aluminum or metal alloys such as steel, or made of rubbers such as natural rubbers (NR), styrene butadiene rubbers (SBR), PI rubbers, polybutadiene rubbers (PB), and ethylene propylene diene monomer (EPDM) rubbers.

The ink composition according to the invention is particularly suitable for marking extruded, moulded, blow-moulded, injection-moulded, and rotation-moulded parts made of organic polymers, in particular made of thermoplastic polymers, notably made of polyvinylchlorides (PVCs), polyethylene terephthalates (PET), or of polyolefins, such as polyethylenes (PEs) or polypropylenes (PPs); or made of rubbers, such as natural rubbers (NR), styrene butadiene rubbers (SBR), PI rubbers, polybutadiene rubbers (PB), and ethylene propylene diene monomer (EPDM) rubbers.

Such parts are, for example, wires, cables, hoses, pipes, cable ducts, cable trays, circuit boards, packagings, and boxes, coatings and housings of all kinds such as electrical boxes and cable boxes.

The ink composition according to the invention is generally an opaque ink composition as defined below.

The invention is also related to a method for marking a substrate, support or object, article, for example, porous or non-porous, by spraying, jetting, an ink composition onto this substrate, support or object using an ink jet printing technique, the sprayed ink composition being the ink jet ink composition according to the invention as described above.

Marking is made using the continuous deflected inkjet ("CIJ") printing technique. The continuous deflected ink jet printing technique also includes the continuous deflected ink jet printing technique, with uncharged drops called the "SPI" technique.

Another object of the invention is a substrate, support or object, for example porous or non-porous provided with a marking obtained by drying and/or absorption (in the substrate or support) of the ink composition as described above.

**STATE OF THE PRIOR ART**

Ink jet printing is a well-known technique which allows printing, marking or decorating of all kinds of objects, at high speed and without contact of these objects with the printing device, with messages which can be changed at will such as bar codes, sell-by dates etc., even on non-planar supports.

Ink jet printing, spraying techniques are divided into two major types, namely the technique known as Drop On Demand or DOD technique, and the technique known as Continuous Ink Jet (CIJ) technique.

Jetting using the drop on demand technique may be done using a so-called "bubble" ink jet, a "piezoelectric" ink jet, a "valve" ink jet, or finally a so-called "Hot Melt" (HM) or phase change ink jet.

In the case of bubble ink jet, ink is vaporised close to the nozzle and this vaporisation causes the ejection of a small quantity of ink located between the resistor that vaporises the ink and the nozzle. In the case of a piezoelectric ink jet, a sudden pressure variation caused by an actuator moved by the electrical excitation of a crystal or a piezoelectric ceramic located close to the nozzle, causes the ejection of an ink drop.

In the case of the "Hot Melt" ink jet, the ink is solvent free and is heated to above its melting point.

"Drop On Demand" printing may therefore be carried out at ambient, room, temperature, this is the case of the piezoelectric ink jet, of the valve ink jet, or of the bubble ink jet, or at high temperature, for example from about 60°C to 130°C, this is the case of the so-called Hot Melt (HM) or phase change ink jet.

Continuous deflected ink jet ("CIJ") spraying consists in sending ink under pressure into a cavity containing a piezoelectric crystal, from which ink escapes through an orifice (nozzle) in the form of a jet.

The piezoelectric crystal, vibrating at a determined frequency, provokes pressure disturbances in the ink jet, which oscillates and gradually breaks up into spherical droplets. An electrode called the "charging electrode" placed on the path of the jet at the location at which it breaks, imparts an electrostatic charge to these droplets, if the ink is conductive. The droplets thus charged are deflected, deviated in an electric field to enable printing.

Uncharged drops that are therefore not deflected or deviated are recovered in a gutter from which ink is sucked up, drawn, and then recycled to the ink circuit.

Herein, we are more particularly interested in ink compositions for the continuous deviated, deflected, ink jet (*"CIJ"*) printing technique

For all ink jet printing techniques and technologies, including the binary continuous deviated, deflected, liquid jet printing technique with uncharged drops called the "SPI" technique, the viscosity of inks at the ink projection temperature is very low, typically from 1 to 10 cPs (mPa.s), or 15 cPs, or 20 cPs. As regards CIJ inks, their viscosity should generally, preferably, lie from 4 to 6 cPs (mPa.s) to be able to be printed by this CIJ printing technique. Thus, all these printing techniques that make use of ink jetting, spraying, can be described as low viscosity ink deposition technologies.

Ink jetting, projection, spraying, enables contactless marking at a high running rate on objects that are not necessarily planer with the possibility of changing the message at will.

Ink compositions that can be sprayed, jetted, particularly in the continuous deflected, inkjet printing technique have to satisfy a number of criteria inherent to this technique related to (among other factors) the viscosity, solubility in a solvent for cleaning, compatibility of ingredients, proper wetting of supports to be marked, etc., and electric conductivity in the case of the continuous deflected, deviated, continuous inkjet printing technique.

Furthermore, these inks must dry quickly, be capable of flowing or remaining motionless close to the nozzle without clogging it, with good stability of the jet orientation to enable easy cleaning of the printing head.

Ingredients of inks currently used in the continuous deflected, deviated, ink jet printing technique, are organic or inorganic, mineral products; they are colouring materials such as dyes or pigments, resins or binders, in one or several more or less volatile organic solvent compound(s) or in water, optionally one or several agent(s), such as salt(s) and/or ionic liquid(s) imparting conductivity (commonly called conductivity agent(s) such as conductivity salt(s)), as well as various additives, such as surface tension modifiers, surface active agents.

Ingredients used in the composition of currently used inks for the drop on demand (DOD) type ink jet printing technique are also organic or inorganic, mineral products; dyes or pigments, resins or binders, in one or several more or less volatile organic solvent compound(s) or in water, in proportions other than those used for inks for the continuous deflected, deviated ink jet printing technique, but without the need for electrical conductivity.

In the case of inks for the "Hot Melt" (HM) ink jet printing technique, the inks do not contain any solvents liquid at ambient temperature, but they rather contain liquid organic products at the jetting, spraying, projection, temperature mentioned above, such as waxes and resins of low molecular weight. These waxes and resins of low molecular weight are generally chosen such that the viscosity of the ink at the jetting, spraying, projection temperature is from 2 to 25 mPa.s, preferably from 4 to 6 mPa.s.

The solvent of inks for ink jet printing, except for inks for Hot Melt ink jet printing, is usually, generally, composed of a mixture comprising firstly a majority quantity of volatile solvent compounds with low viscosity, to enable very fast drying of the markings, and to adjust the viscosity to the required value, for example from 1 to 10 cPs (mPa.s), or 15 cPs, or 20 cPs, preferably from 4 to 6 mPa.s and secondly solvent compounds with a higher viscosity and less volatile, that dry more slowly and are in lower quantities, to prevent the ink from drying in the nozzle during phases in which the printer is switched off.

The most frequently used volatile solvent compounds are alcohols, ketones or esters with low molecular weight.

Among these solvent compounds, essentially methanol, ethanol, 1- and 2-propanol, acetone, methyl-ethyl ketone (*"MEK"*), methyl isobutyl ketone, ethyl acetate, and tetrahydrofuran may be cited.

Less volatile solvent compounds that in particular have a drying retarder function are most frequently ketones such as cyclohexanone, glycol ethers, ethers and acetals, such as furan or dioxan, dimethyl formamide or dimethylsulphoxide, lactones, N-Methyl Pyrrolidone, glycols, and even aliphatic hydrocarbons or water, alone or in combination with other solvent compounds mentioned above.

Additives include, among others:

- Plasticizers that make the dry ink film more flexible, in other words that soften the dry ink film, to improve adherence and cohesion of the ink on the marked support.
- Dispersants that disperse the pigments. Such dispersants stabilise the pigments by steric effect and/or electrostatic effect depending on whether they can be ionised or not and depending on the polarity of the solvent.
- Agents that inhibit corrosion induced by some salts, such as salts that confer conductivity (called conductivity salts) described below such as chlorides.
- Additives that protect the ink against proliferation of bacteria and other microorganisms: these include biocides, bactericides, fungicides and others, particularly useful in inks containing water.
- Surface tension modifiers, surface active agents such as polyether modified polysiloxanes.
- pH regulation buffers.
- Anti-foaming agents.

Inks for ink jet printing may also include surfactants or surface active agents that modify the wetting or penetrating capacity of the ink, in particular surfactants or surface active agents that modify or regulate the static or dynamic surface tension such as Fluorad® FC 430 made by the 3M Company. Such products regularise the size of drop impacts. Due to these products, the impact diameter is the same for all drops regardless of the nature, cleanliness or regularity of the support.

Additives for inks for the continuous deviated, deflected, ink jet ("CIJ") printing technique may also include one or several agents such as salts, called conductivity agents, e.g. conductivity salts.

The conductivity agent(s) such as conductivity salt(s), if any, provide the ink with the conductivity necessary for electrostatic deviation, deflection.

However, it can be noted that in some cases, other ink constituents such as dyes or pigments already confer enough conductivity to the ink so that there is no need to add a conductivity agent, such as a conductivity salt.

Binder(s) or resin(s) is (are) generally, mostly, one or more solid polymeric compound(s) and their choice depends on their solubility in the selected solvents, their compatibility with the dyes and the other additives, their ability to give the right electrostatic charge to the drops, and also depending on the properties that they confer on the ink film once it is dried.

Their primary function is to provide adherence for the ink on a maximum number of supports or on special supports, for example non-porous supports. They also confer appropriate viscosity to the ink for the formation of drops from the jet and they provide the marking obtained with most of its properties of resistance to physical and/or chemical aggression such as resistance to friction and more generally to abrasion.

The polymers used with organic solvents may be synthetic or natural, they may be linear polymers such as rosin resins, shellac, resins of the acrylic, methacrylic, styrenic, vinylic, cellulosic, and phenolic types, polyamides, polyurethanes, melamines, or polyesters; or branched polymers such as dendrimers.

Colouring materials are called "dyes or pigments" depending on whether they are soluble or insoluble, respectively, in the solvent used.

Pigments are inherently insoluble and are therefore dispersed and may or may not be opaque. They impart its colour to the ink, its opaqueness, or particular optical properties such as fluorescence. In some cases, dyes also confer sufficient conductivity to the ink so that there is no need to add a conductivity salt. This is the case of dyes known under the name C.I. Solvent Black 27, 29, 35 and 45.

Ink jet ink composition should give printed messages, markings, having good contrast, good legibility, and good visibility on the surfaces to be printed. Contrast, legibility, visibility are dependent on the colour and on the opaqueness of the ink composition, and on the colour of the surface to be printed.

Thus, the colouring material included in the ink composition is specifically selected depending on the specific colour and lightness of the surface to be printed, marked, so as to impart to the ink composition, and hence to the printed message, marking, a colour, a lightness, and an opaqueness providing good contrast with the colour of the surface to be printed, marked, and therefore good legibility.

White ink jet printing inks for printing on black surfaces or dark-coloured surfaces generally contain inorganic white pigments, mainly titanium dioxide ($TiO_2$).

However, these inorganic white pigments, such as titanium dioxide, cause sedimentation or coagulation due to a difference in specific gravity between the pigment particles and the solvent of the ink. Sedimentation is in turn causing problems of ink stability in printers, in particular in so-called dead volume parts, and lack of ink storage stability.

In addition, when pigment particles having a small diameter are used for clogging prevention purposes, the covering power of the ink is often unsatisfactory.

In other words, one of the main problems with white pigmented ink jet printing inks, especially CIJ inks is sedimentation of pigment particles in the cartridge/bottle and in the printer circuit.

This phenomenon impacts the quality of the print as well as the machinability of the ink involving printhead and/or filters clogging, loss of contrast, etc.

The major technical problems, drawbacks, are mainly related to white inks and are often a consequence of sedimentation of pigment particles, such as $TiO_2$ particles.

To solve this problem, cartridges of white pigmented inks contain a magnetic stirrer to re-homogenize the ink together with a recommendation to shake the cartridge before use.

However, it is difficult to re-homogenize pigmented inks by shaking the cartridge, when pigment particles have settled and form a compact layer on the bottom of the cartridge. Sometimes, the magnetic stirrer is blocked in this layer and the ink is not stirred properly.

Thus, this solution enables to re-homogenize the ink but does not reduce the sedimentation rate.

From the Stokes' law (1), pigment particles sedimentation rate is proportional to density and diameter of pigment particles and inversely proportional to viscosity of the ink:

$$(1) \quad v = \frac{2r^2 g \Delta(\rho)}{9\mu}$$

Where v= sedimentation rate; r = particles radius; g = gravitational acceleration; $\Delta\rho$ = difference between mass density of the particles and mass density of the fluid; and $\mu$: fluid viscosity.

From the Stokes' law, three parameters could be varied to change and decrease the sedimentation rate of the particles.

Nevertheless, viscosity should lie within a specific range, so that the ink can be printed by using the *"CIJ"* printing technique, while white colour and hiding power depends strongly on the particles size which should also be selected within a specific range.

Thus, it appears that the key parameter is indeed the particles density.

Currently, the best candidate for white pigments is titanium dioxide which has the highest hiding power. But $TiO_2$ has a high density, namely about 4.2 kg/m$^3$ or 4.2 g/cm$^3$, and such a high density explained the difficulty to keep the pigment particles well dispersed in ink jet printing inks, especially in CIJ inks.

In order to overcome the above drawbacks and problems, document US-A1-2006/0275606 [1] provides a white pigment, specifically for a water-based ink, comprising particles each comprising a core particle formed of a material having a lower specific gravity than titanium dioxide, and a titanium dioxide layer covering the surface of the core particle, the pigment having a particle diameter of 0.05 to 5 $\mu$m, i.e. 50 to 5000 nm. The core particle may have a particle diameter of 0.01 to 3 $\mu$m i.e. 10 to 3000 nm.

Document [1] is also related to an ink composition for ink jet recording comprising at least a colorant and water, the colorant comprising the white pigment for a water-based ink as disclosed here above.

According to said document, the white pigment has excellent reliability against clogging and excellent stability against coagulation, sedimentation, and at the same time, has a high level of covering power.

The ink of US-A1-2006/0275606 [1] is specifically a water-based, aqueous, ink, and as a material for the core particles, only water-soluble resins are being cited and actually used in the examples.

The inventive ink compositions of the examples of document [1], namely ink compositions 1, 2 and 3, comprise an aqueous emulsion containing titanium oxide-covered core particles (50 wt.%), glycerine as a wetting agent (10 wt.%), *"Olfine E1010"* as a surfactant (0.5 wt.%), triethanolamine (0.5 wt.S%) and the balance pure water.

All the inventive ink compositions of the examples of document [1] therefore contains water as the sole solvent and are free of any organic solvent.

The core particles are made of a water-soluble styrene-acrylic copolymer.

In the *"Background Art"* part of said document ink jet recording is cited. However, in the *"Detailed Description"* part of said document there is no further mention of the printing technique, and the ink composition is simply defined as an "ink composition" without further precision. The ink composition of claim 19 of document [1] is an ink composition for ink jet recording. However, the "CIJ" printing technique is not mentioned.

In the examples of document [1], the ink compositions are printed by a PX-V500 printer manufactured by SEIKO EPSON CORPORATION. This printer uses the "DOD" printing technique.

Moreover, in this document, the ink conductivity is not specified and conductivity agents, salts are not cited among the ink components. Thus, clearly, the ink compositions of document [1] are not used and are not suitable for use in printers using the 'CIJ" printing technique.

According to document US-A1-2019/0194482 [2], for the white pigment for an aqueous ink disclosed in document [1], it is required to further improve stability to precipitation and whiteness.

Thus, document [2] provides a white pigment composition improving stability to precipitation and whiteness when compared to the white pigment of document [1].

The white pigment composition of Document [2], first embodiment, includes core shell titanium oxide particles that each have a core particle and a shell layer covering a surface of the core particles and formed of titanium oxide; silicon oxide particles; and a resin.

The core shell titanium oxide particles have a predetermined particle diameter, namely 50 nm or more and 5000 nm or less, and the silicon oxide particles have a predetermined particle diameter, namely 3 nm or more and 100 nm or less.

Thus, the white pigment composition of document [2] compulsorily comprises silicon oxide particles having a predetermined particle diameter. Stability to precipitation and whiteness are improved by combining the core shell titanium oxide particles and the silicon oxide particles, both having a predetermined particle size. Such an improvement cannot be improved in anyway when using titanium dioxide particles alone.

This white pigment composition of document [2] may be for a white ink which may be used in an ink jet recording method. However, the "CIJ" printing technique is not mentioned.

As a material for the core particles, only water-soluble resins are explicitly cited and seems to actually exhibit the actions and effects claimed in [2].

Only water-soluble resins, such as a styrene-acrylic copolymers are being used as material for the core in the examples of document [2].

This is confirmed by the fact that the core-shell particles of the examples of document [2], first embodiment, are prepared by the method of document [1] using a water-soluble resin as material for the core.

The ink of document [2] is basically a water-based, aqueous, ink.

The solvent of the ink compositions of the examples of document [2], first embodiment, mainly comprises water. These ink compositions are indeed aqueous water-based ink compositions.

Again, the "CIJ" printing technique is not mentioned in Document [2].

In the examples of document [2], first embodiment, the compositions are printed by an ink jet printer PX-M780 printer manufactured by SEIKO EPSON CORPORATION. This printer uses the "DOD" printing technique.

Moreover, in this document the ink conductivity is not specified and conductivity agents, salts are not cited among the ink components. Thus, clearly, the ink composition of document [2] are not used and are not suitable for use in printers using the 'CIJ" printing technique.

Thus, according to the above, it appears that the ink composition of Document [1] is still unsatisfactory as regards stability to precipitation and whiteness, in other words as regards opacity, hiding power, and sedimentation.

Moreover, the ink composition of said document being a water-based aqueous ink containing core-shell particles with a core made of a water-soluble resin- is not used, and cannot be used in the continuous deflected ink jet ("CIJ") printing technique, because the core-shell particles with such a water-soluble core in a water-based solvent are likely not to have the required mechanical strength to resist the high shear stress to which the ink is subjected when sprayed through the nozzle of a "CIJ" printer.

In the same way, it appears that the ink composition of Document [2] is also still unsatisfactory as regards opacity, hiding power, and sedimentation.

Also, the core-shell pigment particles disclosed in Document [2] with a water-soluble core do not have the required mechanical strength to resist the high shear stress to which the ink is subjected when sprayed through the nozzle of a "CIJ" printer.

In the "CIJ" printing technique, the ink is recirculated many times in the "CIJ" printer. Thus, in the "CIJ" printing technique the core-shell pigment particles are subjected to this high-shear stress many times contrary to the "DOD" printing technique where the ink is not recirculated and passes only one time through the nozzle. Moreover, because the ink is recirculated many times in the "CIJ" printer, repeated high-shear stresses occurs also many times in the ink filters of the "CIJ" printer.

In other words, if used in the "CIJ" printing technique, the cores of the core-shell pigment particles disclosed in documents [1] and [2] -due to the solubility of the core in water- would not be kept intact and the particle structure would collapse under the action of mechanical forces, stresses, for example because of repeated high shear in the printhead or in the filters of the "CIJ" printer, or during ball milling processes for dispersing the core-shell particles in the solvent of the ink composition.

In the light of the above, there is a need for an ink jet ink composition with excellent, improved, stability to precipitation, whiteness, opacity, hiding power, and sedimentation, which can specifically and successfully be used in the "CIJ" printing technique.

In other words, there is a need for an ink jet ink composition for the "CIJ" printing technique having higher ink stability in cartridge as well as in printer while keeping required opacity.

There is in particular a need for an ink composition for the "CIJ" printing techniques comprising pigment particles, especially core shell pigment particles, having highest resistance to mechanical forces, stresses, especially to keep intact the core and prevent particle structure collapsing for example when subjected to repeated high shear in the printhead or in the filters of the "CIJ" printer, or during ball milling processes for dispersing the core shell particles in the solvent.

There is also a need for an ink jet ink composition achieving overall a high printing quality. For example, the markings obtained with such an inkjet ink composition should not spread especially on polymer substrates.

The ink should not smudge, especially on polymer substrates, such as PP, PE, PET, and PVC substrates.

The adhesion of the markings to the printed substrate should be high.

In other words, apart from the needs already specified above in relation with sedimentation and opacity, there is a need for an ink jet ink composition that can be successfully, projected by the CIJ printing technique, and which enable the marking of all substrates, such as cables and wires, made of all kinds of material such as polymers (PVC, PP, PE, PET), rubbers, metals, and alloys (steel, aluminium), at ambient temperature.

This ink composition must, further, have all the properties normally required of inks for printers using the continuous deflected ink jet technique: viscosity, resistivity, etc. The ink must have at the same time the property of drying quickly, to not obstruct the nozzles and to enable a rapid start up even after a long stoppage.

The ink composition must, in addition, enable marking at high speed of objects of all kinds, even slightly porous, while always giving printing or marking of excellent quality, definition, and regularities.

The goal of the invention is to provide an ink composition for ink jet printing that meets, among others, the needs and requirements listed above.

The goal of the invention is also to provide an ink composition for inkjet printing that does not have the drawbacks, defects, limitations and disadvantages of the ink compositions of the prior art, and which provides a solution to the problems of the compositions of the prior art as represented e.g. by documents [1] and [2] discussed above.

## SUMMARY OF THE INVENTION

This goal and still other ones are achieved, according to the invention, by a non-aqueous opaque ink composition for the continuous deflected ink jet (*"CIJ"*) printing technique, liquid at room temperature, comprising:

 a) a solvent;
 b) white pigment particles,
 c) a binder, comprising one or more binding resin(s);
 d) a dispersant;
 wherein:

- the solvent consists of one or more organic solvent compound(s);
- the white pigment particles are core shell and/or porous white pigment particles, each particle having a density lower than the density of a non-porous (solid), coreless white pigment particle.

The invention comprise two embodiments which share the same special, unique inventive technical feature as defined herein above and which provide the same solution to the technical problem underlying the invention, namely : This goal and still other ones are achieved, according to a first embodiment of the invention, by a non-aqueous opaque ink composition for the continuous deflected ink jet (*"CIJ"*) printing technique, liquid at room temperature, comprising:

 a) a solvent;
 b) white pigment particles, which are core shell white pigment particles each comprising at least one core particle and a white pigment shell;
 c) a binder, comprising one or more binding resin(s);
 d) a dispersant;
 wherein:

- the solvent consists of one or more organic solvent compound(s);
- the core shell white pigment particles each comprises at least one core particle made of a material insoluble in the solvent and having a density lower than the density of the white pigment of the shell.

This goal and still other ones are also achieved, according to a second embodiment of the invention, by a non-aqueous opaque ink composition for the continuous deflected ink jet (*"CIJ"*) printing technique, liquid at room temperature, comprising:

 a) a solvent;
 b) white pigment particles, which are porous white pigment particles;
 c) a binder, comprising one or more binding resin(s);
 d) a dispersant;
 wherein:

- the solvent consists of one or more organic solvent compound(s);
- the porous white pigment particles each have a mesoporosity and/or a microporosity with closed pores; or
- the porous white pigment particles each have a mesoporosity and/or a microporosity forming an interconnected porous network.

In this second embodiment, the porous white pigment particles are generally coreless particles, do not have any core.

Density is expressed in $kg/m^3$ or $g/cm^3$.

The white pigment in the first and second embodiments (i.e. the pigment of the shell in the first embodiment) may be selected from all known white pigments.

Advantageously, the white pigment may be selected from C.I. (Colour Index) Pigment Whites, such as C.I. Pigment White 5 (Lithopone, mixture of barium sulphate and zinc sulphide), 6 (Titanium Dioxide $TiO_2$), 12 ($ZrO_2$), 18 (chalk), and 21 ($BaSO_4$).

The white pigment (both embodiments, i.e. the white pigment of the shell or the white pigment of the porous particles) may have a density from 2.7 to 4.6 $kg/m^3$, preferably from 3.5 to 4.3 $kg/m^3$, more preferably from 3.7 to 4.3 $kg/m^3$, for example 4.2 $kg/m^3$. 4.2 $kg/m^3$ is for example the density of $TiO_2$ in the rutile form. Titanium Dioxide $TiO_2$ is preferred.

The ink composition according to the invention is an ink composition specifically for the continuous deflected ink jet (*"CIJ"*) printing technique.

The continuous, deflected, deviated, ink jet printing technique also includes the binary deviated continuous ink jet printing technique with uncharged drops called the "SPI" technique.

By « *room temperature* » is generally meant a temperature from 5°C to 30°C, preferably from 10°C to 25°C, still preferably from 15°C to 24°C, better from 20°C to 23°C. It is quite understood that the ink is liquid at atmospheric pressure.

The term core-shell particle has a well-established meaning.

By white pigment shell, e.g. titanium dioxide shell, is generally meant that a white pigment layer (shell) is covering the whole outer surface of the core particle(s). In other words, the core particle(s) are embedded in the white pigment, such as titanium dioxide, are surrounded by the white pigment, such as titanium dioxide.

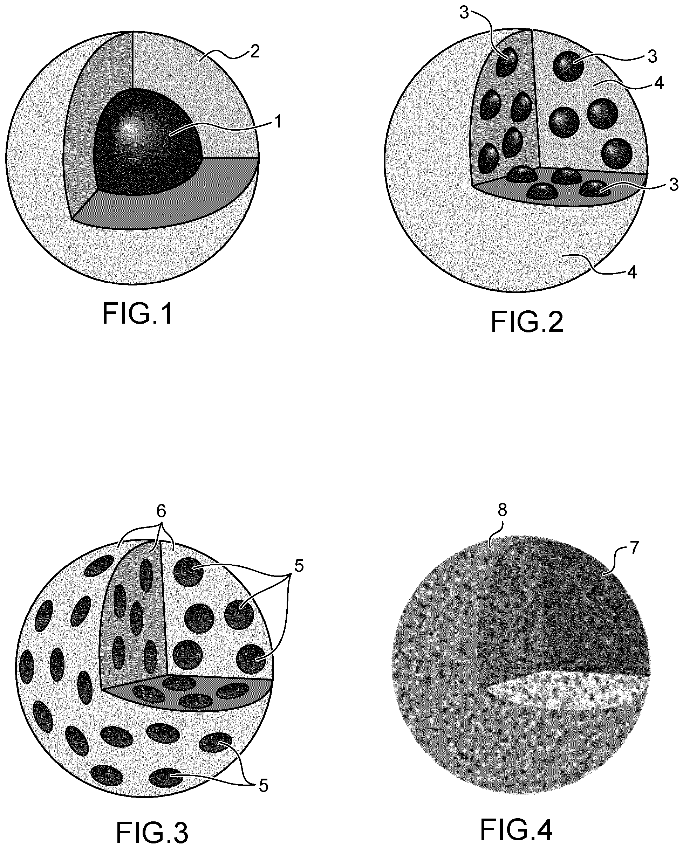

When the core-shell particles comprise only one core particle, they could be named *"core@shell"* particles (see Figure 1), and when the core-shell particles comprise several core particles, they could be named *"multi-core@shell"* particles (see Figure 2).

Core-shell particles comprising several cores, i.e. *"multi-core@shell"* particles generally comprise at least two cores, preferably from 2 to 10000 cores, more preferably from 2 to 1000 cores.

In the second embodiment, the porous white pigment particles each having a mesoporosity and/or a nanoporosity with closed pores (see figure 3), may be named foam-like white pigment particles, or multihollow white pigment particles.

The porous white pigment particles each having a mesoporosity and/or a microporosity forming an interconnected porous network (see figure 4), may be named interconnected-porous network white pigment particles.

Preferably, the porosity of said porous white pigment particles may consist of said mesoporosity and/or a nanoporosity with closed pores, or may consist of said mesoporosity and/or a microporosity forming an interconnected porous network.

The term "mesoporosity" according to the IUPAC nomenclature refers to pores from 2 nm to 50 nm in diameter.

The term "microporosity" according to the IUPAC nomenclature refers to pores smaller, less than 2 nm in diameter.

The term *"pigment"* refers to a colorant that is generally insoluble in water and in organic solvents, especially in the solvent of the ink composition according to the invention and is solid at ambient temperatures.

The term *"dye"* refers to a colorant that is generally soluble in water or in organic solvents, especially in the solvent of the ink composition according to the invention.

Advantageously, the core particles and the core-shell particles and also the porous white pigment particles (second embodiment) may generally have a spherical or spheroidal shape and their size is therefore defined by their diameter.

By « *material insoluble in the solvent"* is generally meant that the solubility of said material in the solvent is less than 0.5% by weight.

The ink composition according to the invention is an opaque ink jet ink composition.

By *"opaque ink composition"* is generally meant an ink composition giving on a substrate, support, or background, markings, printed messages, through which the colour of the substrate, support, or background, cannot be seen any more.

This is especially true when the particle size of the pigments of the ink composition is sufficiently large compared to the wavelength of visible light, and when the refraction index of said pigments is sufficiently different from the refraction index of the medium where they are dispersed.

$\Delta L*n$ of an opaque white ink composition is generally greater than 10.

$\Delta L*n$ is the colour difference between $L*n$, i.e. $L*$ of the dried ink composition coated on a black support, substrate, or background, such as the black strip of an opacity chart, and $L*ref$, i.e. $L*$ (average) of the black support, substrate, or background, such as the black strip (i.e. black background) of the opacity chart.

The ink composition according to the first embodiment of the invention has never been described, nor suggested in the prior art.

First, an ink composition specifically for the continuous deflected ink jet (*"CIJ"*) printing technique comprising core shell white pigment particles, e.g. core-shell titanium dioxide (TiO$_2$) particles, has never been described or suggested in the prior art, as represented e.g. by documents [1] and [2] discussed above.

According to a second fundamental, essential, feature of the ink composition according to the invention, in the first embodiment, the solvent consists of one or more organic solvent compound(s).

Thus, contrary to the ink compositions of the prior art, as represented e.g., by documents [1] and [2], the solvent of the ink composition according to the invention is not aqueous, water-based, and the ink composition can therefore be defined as an organic ink composition rather than an aqueous, water-based ink composition.

According to a third fundamental feature of the first embodiment, the core particles are made of a material insoluble in the solvent of the ink composition and having a density lower than the density of the white pigment of the shell, e.g. titanium dioxide.

There is absolutely no mention or suggestion in the prior art (e.g. in documents [1] and [2]), of core-shell pigment particles having a core that is insoluble in the solvent of the ink composition containing these particles.

In the ink composition of the prior art as represented e.g. by documents [1] and [2], the core of the core-shell particles is made of a material that is soluble in the solvent, namely the core is made of a water-soluble resin.

According to a fourth fundamental feature of the first embodiment, the core particles are made of a material having a density lower than the density of the white pigment of the shell, e.g. titanium dioxide.

A combination of the above features is even less described or suggested in the prior art.

The ink composition according to the first embodiment of the invention *inter alia* meets the needs, criteria and requirements mentioned above and provides a solution to the problems of the ink jet ink compositions of the prior art and does not have the drawbacks, limitations, defects and disadvantages of the inkjet ink compositions of the prior art such as the ink jet compositions of documents [1] and [2].

The ink composition according to the second embodiment of the invention has also never been described, nor suggested in the prior art.

First, an ink composition specifically for the continuous deflected ink jet (*"CIJ"*) printing technique comprising porous white pigment particles with a specific porosity as defined above, has never been described or suggested in the prior art, as represented e.g. by documents [1] and [2] discussed above.

According to a second fundamental, essential, feature of the ink composition according to the invention, in the second embodiment, the solvent consists of one or more organic solvent compound(s).

Thus, contrary to the ink compositions of the prior art, as represented e.g., by documents [1] and [2], the solvent of the ink composition according to the invention is not aqueous, water-based, and the ink composition can therefore be defined as an organic ink composition rather than an aqueous, water-based ink composition.

According to a third fundamental feature of the second embodiment, the porous white pigment particles each have a specific porosity, namely a mesoporosity and/or a microporosity with closed pores; or a mesoporosity and/or a microporosity forming an interconnected porous network.

There is absolutely no mention or suggestion in the prior art (e.g. in documents [1] and [2]), of white pigment particles having such a specific porosity.

A combination of the above features is even less described or suggested in the prior art.

The ink composition according to the second embodiment of the invention also inter *alia* meets the needs, criteria and requirements mentioned above and provides a solution to the problems of the ink jet ink compositions of the prior art and does not have the drawbacks, limitations, defects and disadvantages of the inkjet ink compositions of the prior art such as the ink jet compositions of documents [1] and [2].

The core-shell particles of the ink composition according to the first embodiment of the invention have a lower density -for example 3.2 kg/m$^3$- than solid white pigment particles (the white pigment being the same), for example solid titanium dioxide particles (density 4.2 kg/m$^3$), while keeping the same opacity and possibly the same diameter as solid white pigment particles, for example solid TiO$_2$ particles. This results in a decrease in the sedimentation rate from 5 to 90% when compared e.g. to solid TiO$_2$ particles (See Table 1).

The core-shell particles of the ink composition according to the first embodiment of the invention have a density which may be preferably from 1 to 4.1, more preferably from 1.5 to 3.8, even more preferably from 1.5 to 3.0 or 3.2 kg/m$^3$, for example 3.2 kg/m$^3$ .

In the same way, the porous particles of the ink composition according to the second embodiment of the invention have a lower density-for example 3.2 kg/m$^3$ - than solid white pigment particles (the white pigment being the same), for example solid titanium dioxide particles (density 4.2 kg/m$^3$) while keeping the same opacity and possibly the same diameter as solid (non-porous) white pigment particles, for example solid TiO$_2$ particles. This results in a decrease in the sedimentation rate of from 5 to 90% when compared e.g. to solid TiO$_2$ particles.

The porous particles of the ink composition according to the second embodiment of the invention have also a density which may be preferably from 1 to 4.1, more preferably from 1.5 to 3.8, even more preferably from 1.5 to 3.0 or 3.2 kg/m$^3$, for example 3.2 kg/m$^3$.

Accordingly, the ink compositions according to the invention (first and second embodiments) have higher ink stability in ink cartridges and in ink printers a well, while keeping the required opacity, hiding power.

Importantly, in the first embodiment, because the core of the particles is made of a material insoluble in the solvent of the ink composition, the core-shell particles have the required mechanical strength to resist the high shear stress to which the ink is subjected many times when sprayed through the nozzle of a *"CIJ"* printer, and when passing many times through the ink filters of the "CIJ" printer, making therefore, surprisingly, the ink composition according to the first embodiment of the invention, unlike the ink compositions of documents [1] and [2] perfectly suitable for use in the *"CIJ"* printing technique.

In other words, in the first embodiment of the ink composition according to the invention, the core is kept intact and the particle structure does not collapse under the action of mechanical forces, of repeated stresses, for example because of high shear in the printhead and in the filters of the "'CIJ" printer, or during milling processes for dispersing the core-shell particles in the solvent of the ink composition. The shear stress is generally from 200 000 to 505 000 s$^{-1}$ in the printhead in *"CIJ"* printers and in "SPI" printers as well.

In the same way, importantly, in the second embodiment, because of their specific porosity as defined above, the porous pigment particles have the required mechanical strength to resist the high shear stress to which the ink is subjected many times when sprayed through the nozzle of a *"CIJ"* printer, and when passing many times through the ink filters of the "CIJ" printer, making therefore, surprisingly, the ink composition according to the second embodiment of the invention, unlike the ink compositions of documents [1] and [2] perfectly suitable for use in the *"CIJ"* printing technique.

In other words, in the second embodiment of the ink composition according to the invention, the core is kept intact and the particle structure does not collapse under the action of mechanical forces, of repeated stresses, for example because of high shear in the printhead and in the filters of the "'CIJ" printer, or during milling processes for dispersing the core-shell particles in the solvent of the ink composition.

In this second embodiment, resistance to mechanical stress will depend on the pores size and shape, and on the fraction of porosity, porosity value as well.

Accordingly, the pore size is as defined above and provides the required mechanical strength, resistance.

Advantageously, the porosity level (second embodiment) may generally be from 5 to 90%, preferably from 10 to 80%, and more preferably from 20 to 70% to maximize mechanical resistance, stress resistance.

The porosity may be measured according to BET and BJH measurements, analysis, namely Brunauer-Emmett-Teller (BET) Surface Area Analysis and Barrett-Joyner-Halenda (BJH) Pore Size and Volume Analysis.

In addition, the ink compositions according to the invention (both first and second embodiments) provide markings that resist to friction, rubbing, for example with a finger and with a gum, and are not damaged or erased.

The printing quality is high and the markings visually appear as distinct, well separated, round dots (or droplets), which do not merge with each other and the printed message is clear and easily legible.

In other words, the marking dots exhibit a high definition and do not smear or smudge.

The markings obtained with the opaque ink compositions according to the invention (both first and second embodiments) are also highly resistant to water, organic solvents, alcohols, oils, and greasy substances, for example to water, ethanol, isopropanol, and gasoline. Said markings are also resistant to rubbing with said substances.

Markings obtained with the ink compositions according to the invention (both first and second embodiments) do not transfer.

Markings obtained with the ink composition according to the invention (both first and second embodiments) also give good results when subjected to the "Scotch Tape" test.

The opaque inkjet ink compositions according to the invention (both first and second embodiments) have a high lightfastness.

The ink compositions according to the invention (both first and second embodiments) are also stable upon storage even during long period of time, generally of at least 9 months, between 0°C and 50°C.

Advantageously, the core shell white pigment particles (first embodiment) or the porous white pigment particles (second embodiment) may have an average particle diameter from 50 nm to 5000 nm, preferably from 100 to 700 nm, more preferably from 200 to 600 nm, white colour and hiding power depends strongly on particles sizes, with an optimal in the range from 200 nm to 600 nm.

Advantageously, the single core particle, in the core shell particles comprising only one core particle, may have an average particle diameter from 10 nm to 3000 nm, preferably from 100 to 500 nm, more preferably from 100 to 400 nm, for example 150 nm or 200 nm.

Advantageously, the core particles, in the core shell particles comprising more than one, i.e. several core particles may have an average particle diameter from 10 nm to 500 nm, preferably from 20 to 100 nm,.

The core should have a lower density than the white pigment, e.g. TiO$_2$, and the density of the core should be preferably as low as possible to reduce sedimentation (see Table 1).

Advantageously, the material of the core particles may have therefore a density from 0.5 to 3; preferably from 0.5 to 2.0, more preferably from 1.0 to 1.5_kg/m$^3$.

Advantageously, the material of the core particles may be selected from the group consisting of organic polymers, minerals (such as calcium carbonate), metal oxides, metalloid oxides such as SiO$_2$, and mixtures thereof.

The material of the core particles is generally different from the material of the shell, namely the white pigment.

The organic polymers may preferably be selected from the group consisting of Polyethers, Polystyrene (PS), Crosslinked Polystyrene (PS), Poly Methyl Methacrylate (PMMA), PS/PMMA copolymers, PolyvVinylPyrrolidone (PVP), PolyVinylAlcohol (PVA), PVP/PVA copolymers, crosslinked PVP, crosslinked PVA, crosslinked PVP/PVA copolymers, PolyVinylAcetate (PVAc), polyesters, cellulosic resins, polyketones, polyamides, polyolefins such as Polypropylene (PP) and PolyEthylene (PE), all copolymers containing at least one of the above polymers (i.e. copolymers thereof), namely copolymers of the above polymers (polymers also including resins) with each other, or copolymers of any of the above polymers with one or more other polymer(s) not listed above, and mixtures and combinations thereof.

Advantageously, the white pigment (both first and second embodiments), such as titanium dioxide, may be in a non-crystalline form, or in a partially (semi) crystalline from, or in a fully crystalline form.

As regards Titanium dioxide, said crystalline form may be an anatase or rutile or brookite crystalline form.

Preferably in the first embodiment, the material of the core and the white pigment, such as TiO$_2$, of the shell may be both partially (semi) crystalline or crystalline to improve the light-scattering effect.

Preferably in the second embodiment, the white pigment may be partially crystalline or crystalline to improve the light-scattering effect.

An example of a crystalline metalloid oxide forming the core is crystalline SiO$_2$. Examples of semi-crystalline polymers are syndiotactic PS, polyesters, polyketones, polyamides, cellulose resins, and polyolefins such as PP and PE.

The core(s) may optionally have a hollow structure.

Advantageously, the core(s) and/or the shell, in the first embodiment, may have a porous structure to decrease global density of the pigment.

Advantageously a ratio: average particle size of the core shell titanium dioxide particles/average particle size of the core particle, when only one core particle is present, may be from 10:0.5 to 10:9.5.

Advantageously, the ink composition according to the invention (both first and second embodiments) may not further contain, as the compositions of Document [2], in addition and independently to the core-shell white pigment particles or to the porous white pigment particles, silica particles, especially silica particles having an average particle diameter of 3 nm or more and 100 nm or less.

Of course, these silica particles are not the silica particles that could form the core of the white pigment core shell particles.

All the effects and advantages of the ink composition according to the invention (both first and second embodiments) are obtained when the ink composition comprises the core-shell particles or the porous white pigment particles even if the ink composition does not comprise any silica particles, in addition and independently to the core-shell white pigment particles.

Advantageously, the white pigment particles, namely the core shell particles or the porous white pigment particles may be highly monodispersed particles centered on one specific particle size, with a narrow particle size distribution with a polydispersity index below 0.3, preferably below 0.1. The particle size may preferably be centered on one specific particle size from 200 to 600 nm. For example, such a specific particle size may be 300, 350, 400, 450, 500 or 550 nm.

With such a highly monodisperse particles centered on specific particles sizes, optimum opacity is obtained.

Advantageously, the dispersant may be preferably selected from the group consisting of tannic acid, citrate esters, polyvinylpyrrolidone, vinyl-alcohol resins, vinyl-acetate resins, ester resins, cellulose polymers, polyurethanes, vinylic, phenolic, (meth) acrylic polymers, acrylic acid/methacrylic acid or maleic acid copolymers, acrylamide-based resins, amphiphilic block copolymers, polyalkyleneimines, polymeric alkoxylates, phosphodiester resins, silane coupling agents; all copolymers containing at least one of the above polymers (i.e. copolymers thereof), namely copolymers of the above polymers (polymers also including resins) with each other, or copolymers of any of the above polymers with one or more other polymer(s) not listed above; and mixtures and combinations thereof.

The polymers, copolymers and resins listed herein above have preferably a Mw from 1000 to 50000 Da, more preferably from 1000 to 10000 Da.

The dispersants which are not polymers, copolymers, or resins have lower Mw, for example tannic acid and citrate esters are not polymers and have a Mw < 500 g/mol.

Mw is the weight average molecular weight.

Examples of dispersants that may be used in the ink composition of the invention are available under the following trade names:

Solsperse grades from Lubrizol such as Solsperse 34750, Solsperse 36000, Solsperse J945, Solsperse 47000, Solsperse 85000, , Disperbyk, BYKJET and BYK-LP grades from BYK such as Disperbyk-190, Disperbyk -2001, Disperbyk -2010, Disperbyk-2015, Disperbyk-2157, Disperbyk-2200, and other Dysperbyks, BYKJET-9131, BYKJET-9151, BYKJET-9152, BYKJET-9170, BYKJET-9171, BYK-LP N 22339, BYK-LP N22980, BYK-LP N 23054, Tego Dispers grades from Evonik such as Tego Dispers 670, Tego Dispers 675, Tego Dispers 685, Tego Dispers 690, Tego Dispers 1010, Neocryl grades from DSM such as Neocryl B-813, and mixtures thereof.

Advantageously, the amount of dispersant(s) may be from 0.5 to 15% of the total pigment weight, preferably from 1.5 to 10% of the total pigment weight.

Advantageously, the white pigment particles, namely the core shell particles or the porous white pigment particles may be present in an amount from 0.5% to 30% by weight, preferably from 1% to 15% by weight, more preferably from 2% to 10% by weight of the total weight of the ink composition.

Advantageously, the ink composition according to the invention may further comprise one or more other white pigments different from the core shell white pigment particles or from the porous white pigment particles.

Said pigments different from the core shell white pigment particles or from the porous white pigment particles may be selected for example from the group consisting of C.I. (Colour Index) Pigment Whites, such as C.I. Pigment White 5 (Lithopone, mixture of barium sulphate and zinc sulphide), 6 ($TiO_2$), 12 ($ZrO_2$), 18 (chalk), and 21 ($BaSO_4$).

Said white pigments different from the core shell white pigment particles may be present in a total amount from 0.5% to 15% by weight of the total weight of the ink composition.

The ink composition according to the invention may further comprise one or more dye(s) and/or one or more pigment(s) having a colour other than white.

Thus, the ink composition according to the invention may further comprise one or more black pigment(s) and/or one or more black dye(s).

The black pigment(s) may be selected from all known black pigments, such as carbon blacks.

The black pigment(s) may preferably be selected among C.I. (Colour Index) Pigment Blacks, such as C.I. Pigment Black 6 (carbon black) and C.I. Pigment Black 7 (carbon black).

The black dye(s) may be selected from all known black dyes.

The black dye(s) may preferably be selected among C.I. (Colour Index) Solvent Blacks, such as C.I. Solvent Black 27, C.I. Solvent Black 29, C.I. Solvent Black 35, and C.I. Solvent Black 45.

Solvent Black 27 is preferred. It has been shown that Solvent Black 27 is perfectly compatible with the other components of the ink composition, especially with the white pigments such as titanium dioxides ($TiO_2$).

An example of a black dye (Solvent Black 27) is Savinyl® Black RLSN01, a solvent soluble metal complex dye.

Solvent Black 27 is also available from Orient Chemical Industries Co. Ltd under the denomination VALIFAST® Black 3830.

When the ink composition according to the invention further comprises one or more black pigment(s) and/or one or more black dye(s), the ink composition according to the invention is a grey ink jet ink composition, i.e. an ink jet ink composition which is of a grey colour.

The markings, printed messages obtained with such a grey ink jet ink composition according to the invention are also of a grey colour.

Grey is generally defined as a colour intermediate between black and white.

Generally, a*, and b* of a grey ink composition and of the dried coated grey ink composition measured in CIELAB coordinates, CIELAB colour space (also known as CIE L*a*b*) are low, i.e. less than 10 in absolute value.

And L* of a grey ink composition and of the dried coated grey ink composition measured in CIELAB coordinates, CIELAB colour space (also known as CIE L*a*b*) is between 0 (not included) and 100 (not included) and preferably from 0 (not included) to 80.

The one or more black pigment(s) and/or the one or more black dye(s) c) may be present in a total amount from 0.01% to 9% by weight of the total weight of the ink composition.

The ratio: amount by weight of the one or more black pigment(s) and/or the one or more black dye(s)/ amount by weight of the one or more white pigment(s) may be from 0.001 to 1.

Advantageously, the opaque ink composition according to the invention may further comprise one or more dye(s) and/or one or more pigment(s) having a colour other than white and other than black.

Said colour other than white and other than black may be any colour such as red, orange, yellow, green, blue, violet, and purple.

Said one or more dye(s) and/or one or more pigment(s) having a colour other than white and other than black may be chosen depending on the colour of the substrate, support to be printed.

The one or more dye(s) and/or the one or more pigment(s) having a colour other than white and other than black may be present in a total amount from 0.01% to 10%, preferably from 0.01% to 5%by weight of the total weight of the ink composition.

The one or more dye(s) having a colour other than white and other than black may be selected from among Colour Index (C.I.) solvent dyes, and the one or more pigment(s) having a colour other than white and other than black may be selected from among Colour Index (C.I.) pigments.

Said Colour index (C.I) solvent dyes may be chosen from among metal complex dyes. Such dyes dissolve well in the organic solvents of the ink jet ink composition.

The Colour Index (C.I.) solvent dyes having a colour other than white and other than black may preferably be selected from among yellow, orange, red, violet, purple, blue, green, and brown C.I. solvent dyes.

The Colour Index (C.I.) pigments having a colour other than white and other than black may preferably be selected from among yellow, orange, red, violet, purple, blue, green and brown C.I. pigments.

As an example, C.I. Pigment Yellow 83 improves ink readability on blue substrates.

Advantageously, the binding resin(s) may be selected from (meth)acrylic, vinylic, ketonic, hydroxyaromatic for example phenolic, cellulosic, styrenic, epoxy, polyurethane, styrene-acrylate, alkoxysilane, ester resins, and combinations thereof.

Preferably, the binding resin(s) is (are) selected from cellulosic, polyurethane, vinylic, phenolic, (meth) acrylic resins, ester resins, styrene-acrylate resins, and the combinations of two or more of the latter.

More preferably, the binding resin(s) is(are) selected from vinyl acetate/vinyl chloride copolymers, phenolic resins, cellulosic resins, ester resins, styrene-acrylate resins, (meth) acrylic resins and combinations thereof, which gives the bests results in terms of adhesion to the substrate, printing definition, quality of markings, rubbing resistance.

Even more preferably, the binding resin(s) is(are) selected from vinyl acetate/vinyl chloride copolymers -which gives even better results in terms of adhesion to the substrate, printing definition, quality of markings, and rubbing resistance- ester resins, styrene-acrylate resins and (meth) acrylic resins.

Specific examples of these vinyl acetate/vinyl chloride copolymers resins include those sold under the trade name of Vinnol® from Wacker Chemie®. These resins include structurally modified carboxyl-vinyl chloride/vinyl acetate polymers such as Vinnol® E15/45M, hydroxyl-modified vinyl chloride/vinyl acetate copolymers such as Vinnol® E15/40A or unmodified vinyl chloride/vinyl acetate copolymers such as Vinnol® H14/36/ Vinnol® H14/36 TF.

A specific example of these (meth) acrylic resins includes ELVACITE® 2008 an acrylic resin available from Lucite International.

More exactly, ELVACITE® 2008 is a low molecular weight methylmethacrylate copolymer.

ELVACITE® 2008 has methacrylic acid incorporated for pigment dispersions.

Advantageously, the binder may represent from 0.1 to 50% by weight, preferably from 1% to 45% by weight, still preferably from 5% to 30% by weight, better from 10% to 20% by weight, of the total weight of the ink composition according to the invention.

The ink composition according to the invention is a non-aqueous composition, which means that the ink composition according to the invention contains a very low proportion of water.

Thus, the ink composition according to the invention usually comprises less than 0.5% by weight of water, preferably less than 0.1% by weight of water and even more preferably less than 0.05% by weight of water in proportion to the total weight of the ink; even better, the ink composition according to the invention may be considered to essentially contain no water (0% by weight of water).

Since the added water is an impurity in the various components of the ink, the water content will be low when the degree of purity of the components is high. In fact, it could be said that the ink according to the invention does not contain any added water but only water included as an impurity in the different constituents of the ink.

Advantageously, in the ink composition according to the invention, the solvent may generally represents 20% to 99% by weight of the total weight of the ink composition, preferably the solvent may represent from 30% to 95% by weight, more preferably 30% to 90% by weight, even more preferably from 60% to 80% by weight, of the total weight of the ink composition according to the invention.

The solvent of the ink composition according to the invention is exclusively organic and only comprises organic solvent compounds.

In other words, the solvent of the ink composition according to the invention consists of one or several organic solvent compound(s). Thus, the solvent of the ink composition according to the invention does not comprise water, is water-free.

Advantageously, said organic solvent compound(s) comprise(s) a majority weight proportion, based on the total weight of the solvent (50% by weight of the total weight of the solvent or more, or even up to 100% by weight of the total weight of the solvent), of one or several volatile organic solvent compound(s), and a minority weight proportion, based on the total weight of the solvent, of one or several non-volatile organic solvent compound(s).

Preferably, the solvent consists of one or several volatile organic solvent compound(s).

By « *volatile organic solvent compound* » is generally meant that this compound has a speed of evaporation, evaporation rate, of more than 0.5 (preferably of more than 1.0, more preferably of more than 1.5) on the scale in which n-butyl acetate has a speed of evaporation equal to 1. In other words (see below), this organic solvent compound has a volatility index according to NF T30-301 standard of more than 0.5, preferably of more than 1.0, more preferably of more than 1.5.

Said organic solvent compound(s) being part of the solvent may be selected, for example from alcohols, in particular low molecular weight alcohols, for example aliphatic alcohols such as ethanol, propanol-1, propanol-2, n-butanol, butanol-2; ketones preferably with a low molecular weight; ethers of alkylene glycols; esters of alkylene glycols and esters of alkylene glycol ethers, such as acetates; dimethyl formamide; N-methyl pyrrolidone; acetals; esters; linear or cyclic ethers; aliphatic, cyclic or linear hydrocarbons; aromatic hydrocarbons; and carbonates such as propylene carbonate, ethylene carbonate and dimethyl- and diethyl-carbonates; and mixtures thereof.

Preferably, this or these solvent compound(s) has(have) the property of dissolving the other ingredients of the ink, notably the binder, the dyes, the additives, etc. and also have the property to wet the white pigment particles and any pigment particle in suspension, dispersion.

The alcohols will preferably be selected from linear or branched aliphatic alcohols with 1 to 8 carbon atoms, such as methanol, ethanol, propanol-1, propanol-2, n-butanol, butanol-2, tert-butanol, etc.

The ketones will preferably be selected from ketones with 3 to 10 carbon atoms, such as acetone, butanone (methyl-ethyl-ketone or MEK), pentanone-2 (methyl-propyl-ketone or MPK), methyl-3 butanone-2 (methyl-isopropyl-ketone) or MiPK, diethyl ketone, and methyl-4 pentanone-2 (methyl-isobutyl-ketone or MiBK).

The ethers of alkylene glycols are preferably selected from mono-alkyl ethers ($C_1$-$C_6$ alkyl group) or dialkyl ethers ($C_1$-$C_6$ alkyl groups) of alkylene glycol comprising from 1 to 10 carbon atoms in the alkylene chain, preferably these are ethers of ethylene or propylene glycol, such as methoxy-propanol.

The esters of alkylene glycols and the esters of alkylene glycol ethers are preferably selected from among the esters of those with saturated aliphatic carboxylic acids with 1 to 6 carbon atoms, such as formic acid, acetic acid, propionic acid, butyric acid, valeric acid and caproic acid.

Mention may for example be made of methoxypropyl acetate, butyldiglycol acetate, etc.

The esters are preferably selected from low molecular mass esters such as formates, acetates, propionates or butyrates of alcohols with 1 to 10 carbon atoms.

The acetals are preferably selected from low molecular mass acetals such as ethylal and methylal.

The ethers are preferably selected from among low molecular mass ethers like dioxolane or tetrahydrofurane.

The man skilled in the art may easily identify from among these solvent compounds those which are volatile and those which are not volatile (see below, Formula (2)).

A preferred solvent of the ink composition according to the invention may comprise a majority amount by weight (50% or more by weight) based on the total weight of the solvent, preferably consists of, one or several solvent compound(s) selected from ketones with 3 to 10 carbon atoms, such as acetone, butanone (methyl-ethyl-ketone or MEK), pentanone-2 (methyl-propyl-ketone or MPK), methyl-3 butanone-2 (methyl-isopropyl-ketone or MiPK), diethyl ketone, and methyl-4 pentanone-2 (methyl-isobutyl-ketone or MiBK); alcohols with 1 to 8 carbon atoms, such as ethanol, propanol-1, propanol-2, n-butanol, butanol-2, tert-butanol; and mixtures thereof.

A particularly preferred solvent of the ink composition according to the invention comprises a majority amount by weight based on the total weight of the solvent, of MEK, or of MPK, or of MiPK, or of diethylketone, ethanol, propanol-1, propanol-2, n-butanol, or butanol-2, more preferably, the solvent consists of MEK or of MPK or of MiPK or of diethylketone, ethanol, propanol-1, propanol-2, n-butanol, or butanol-2

This preferred solvent may further comprise one or several other solvent compounds, other than the ketone(s) and alcohol(s) in a total minority amount by weight, based on the total weight of the solvent, for example in an amount from 0.1% to 20% by weight, preferably from 5% to 15% by weight, based on the total weight of the solvent, in order to optimize the properties of the inks. These minority solvents may be selected from esters, ethers of ethylene glycol or of propylene glycol, and from acetals.

Generally, the solvent of the ink composition according to the invention (or more precisely the one or more organic solvent(s) liquid at ambient temperature of said solvent) has a volatility index (Ve) of evaporation index according to NF T30-301 standard (relative to n-butyl acetate) of more than 0.5, preferably of more than 1.0, and more preferably of more than 1.5.

MEK has a Ve of 3.7 and ethanol has a Ve of 2.

NF T30-301 standard defines the volatility (or evaporation) index of a solvent as follows:

The volatility index (Ve) is the quotient of the evaporation time of n-butyl acetate taken as standard solvent, divided by the evaporation time of the tested solvent, said times being measured under the conditions set out in said NF T30-301 standard.

Thus,

$$\text{Ve (relative to n-butyl acetate)} = \frac{\text{evaporation time of n-butyl acetate}}{\text{evaporation time of the tested solvent}}.$$

Advantageously, the ink composition may further comprise one or several plasticizers (of the binding resin(s)) for example selected from plasticizers known to the man skilled in the art and selected according to the binder used comprising one or several binding resin(s).

The plasticizer may be selected from all the plasticizers known to the man skilled in the art. The plasticizer is selected according to the binder used comprising one or several binding resin(s).

Mention may be made, as a plasticizer, for example, of thermoplastic polyurethanes, polyesters such as polycaprolactone, phthalates, adipates, esters such as citrates like trialkyl citrates, for example tributyl citrate, alkyl phosphates, glycerol, lactic acid, oleic acid, polypropylene glycol, triglycerides of fatty acids, levulinic acid; carbamates or carbamic resins; and mixtures thereof.

By "thermoplastic polyurethanes" are meant polyurethanes from the polycondensation of polyalcohols and of polyisocyanates.

Advantageously, the plasticizer(s) may be generally present in an amount of at least 0.05%, preferably 0.1 to 20% by weight, of the total weight of the ink composition.

The composition according to the invention, is jettable, sprayable, using the deflected continuous ink ("CIJ") jet printing technique, and may therefore further optionally comprise at least one conductivity salt, unless another ingredient of the ink such as a dye, pigment or other is itself an ionisable compound such as a salt that can confer conductivity when it is dissociated, and gives sufficient conductivity to the ink so that there is no need to add another conductivity salt strictly speaking.

The ink composition according to the invention has to be applicable by a deflected continuous ink jet technique, it must therefore have a sufficient electrical conductivity (in the liquid state), which may generally be greater than or equal to 5 µS/cm at 20°C, preferably greater than or equal to 300 µS/cm at 20°C, even more preferably greater than or equal to 500 µS/cm at 20°C.

Specifically, the "SPI" inks may have a conductivity from 5 to 1500 µS/cm, preferably from 5 to 500 µS/cm at 20° C.

The conductivity of the ink composition according to the invention using the deflected continuous jet printing technique (CIJ) could for example be greater than or equal to 300 µS/cm at 20°C, particularly from 500 to 2000 µS/cm at 20°C.

Let us specify that the electric conductivity is measured with a commercial instrument and according to the principle well-known to the man skilled in the art, for example described on the site: http://fr.wikipedia.org/wiki/Conductim%C3%A9trie.

The electric conductivity may be measured according to the following standard:
ASTM D1125 - 14: Standard Test Methods for Electrical Conductivity and Resistivity of Water.

The electric conductivity may be measured for example with a commercially available conductimeter of the Radiometer® Company.

However, it will sometimes be necessary to include at least one conductivity agent strictly speaking into the ink composition, different from ionisable compounds, such as the dyes, pigments and other ingredients mentioned above.

The conductivity agent may be selected from conductivity salts, ionic liquid and mixture thereof.

A "conductivity agent" such as a "conductivity salt" or a ionic liquid generally means an agent, such as a salt that confers electrical conductivity to the ink composition.

Advantageously, the conductivity salt may thus be chosen from among alkaline metals salts such as lithium, sodium, potassium salts, alkaline earth metal salts such as magnesium and calcium salts, and single or quaternary ammonium salts; these salts being in the form of halides (chlorides, bromides, iodides, fluorides), perchlorates, nitrates, thiocyanates, formiates, acetates, sulphates, propionates, trifluoroacetates, triflates (trifluoromethane sulphonates), hexafluorophosphates, hexafluoroantimonates, tetrafluoroborates, picrates, carboxylates or sulphonates, etc.

The ionic liquid may be selected from all known ionic liquids. Examples of ionic liquids that can be used in "CIJ" inks are disclosed in WO-A2-2012/120088 [3] (equivalent to US-A1-2014/065381).

Since, generally, the markings obtained with the ink composition usually have to be resistant to water, this or these conductivity agents, e.g. salts, will preferably be chosen from among those that are insoluble in water (in other words, in general, for which the solubility in water is less than 0.5% by weight), such as fatty chain quaternary ammonium and hexafluorophosphates or hexafluoroantimonates.

Therefore, this at least one conductivity agent, e.g. salt, will be present if necessary in the ink composition so as to confer the above conductivity to the ink: preferably, its (their) amount will be from 0.1 to 20% by weight, more preferably from 0.1 to 10% by weight and even more preferably from 0.1 to 5% by weight, of the total weight of the ink composition.

Advantageously, the composition according to the invention may also further comprise one or several additives, for example chosen from among the compounds that improve the solubility of some of its components, the print quality, the adherence, or the control of wetting of the ink on different supports.

The additive(s) may be chosen for example from among anti-foaming agents; chemical stabilisers; UV stabilisers; surface active agents such as Fluorad® FC430 or BYK UV-3500 or polyether modified polysiloxanes ; agents inhibiting corrosion by salts, particularly by conductivity salts; bactericides, fungicides and biocides; and pH regulatory buffers, etc.

The additive(s) may each be used at very low doses, usually less than or equal to 5% each and sometimes as low as 0.01% each, depending on whether they are anti-foaming agents, stabilisers or surface-active agents.

The additive(s) may each be used at very low doses, usually less than or equal to 5% each and sometimes as low as 0.01% each.

The viscosity of the ink composition according to the invention may be generally from 1 to 20 cPs (mPa.s), preferably from 1 to 15 cPs (mPa.s), more preferably from 2 to 10 cPs (mPa.s) at 20°C, better from 4 to 6 cPs (mPa.s).

The viscosity may be measured according to the following standard:

DIN 53019 -1: Measurements of viscosities and flow curves by means of rotational viscometers.

The dynamic viscosities may be measured for example by means of a viscometer with coaxial cylinders, such as the viscometer with coaxial cylinders of the *"Couette"* type of the Contraves® Company.

Another object of the invention is a method for marking a substrate, support or object, article, for example, porous or non-porous, by spraying, jetting, an ink composition onto this substrate, support or object using a continuous deflected ink jet ("CIJ") printing technique, the sprayed ink composition being a non-aqueous opaque ink composition according to the invention as described above.

Marking is made using the continuous deflected ink jet (*"CIJ"*) printing technique. The continuous deflected ink jet printing technique also includes the continuous deflected ink jet printing technique, with uncharged drops called the "SPI" technique.

Another object of the invention is a substrate, support or object, for example porous or non-porous provided with a marking obtained by drying and/or absorption (in the substrate or support) of the ink composition as described above.

Said marking comprises essentially the dye or pigment of the ink and the binder and is obtained by evaporation and/or absorption in the substrate, of essentially all other constituents of the ink such as the solvent.

The substrate is whatever substrates on which one can print using the CIJ printing technique.

Advantageously, this substrate may be made of metal, for example of iron, aluminium, or steel especially stainless steel (cans such as beverage cans); of glass (glass bottles); of ceramic; of a material containing cellulose such as cellophane, paper, possibly coated or glazed, cardboard or wood; of an organic polymer, particularly a thermoplastic polymer (plastic), particularly in the form of a film, for example chosen from among PVDCs, PVCs, polyesters, PETs, polyolefins, such as polyethylenes (PE) or polypropylenes (PP); of poly(methyl methacrylate) PMMA also called "Plexiglas"; of fabric; of natural rubber (NR) or synthetic rubber such as styrene butadiene rubber (SBR), PI rubber, polybutadiene rubber (PB), and ethylene propylene diene monomer (EPDM) rubber; or of any other non-porous or porous substance; or of a composite of several of the above materials.

The substrate may be an extruded, moulded, blow-moulded, injection-moulded, or rotation-moulded part made of one or more organic polymer(s), in particular made of one or more thermoplastic polymer(s), preferably selected from polyvinylchlorides (PVCs), polyethylene terephthalates (PET), and polyolefins, such as polyethylenes (PEs) or polypropylenes (PPs); or made of rubbers such as natural rubbers (NR), styrene butadiene rubbers (SBR), PI rubbers, polybutadiene rubbers (PB), and ethylene propylene diene monomer (EPDM) rubbers.

Said part may, for example, be selected from wires, cables, hoses, pipes, cable ducts, cable trays, and boxes, coatings and housings of all kinds such as electrical boxes and cable boxes.

The substrate may have any shape.

An excellent quality of markings, printings can be obtained on all substrates, particularly on wires, cables, hoses, pipes, cable ducts, cable trays, circuit boards, packagings and boxes, coatings and housings of all kinds such as electrical boxes and cable boxes.

The invention will be better understood upon reading the following description of particular embodiments of the invention, also including illustrative and non-limiting examples, in relation with the appended drawings.

## BRIEF DESCRIPTION OF THE DRAWINGS.

- Figure 1 is an exploded view of a core shell particle (first embodiment) comprising only one core particle, i.e. a *"core@shell"* particle.
- Figure 2 is an exploded view of a core-shell particle (first embodiment) comprising more than one core particles, i.e. several core particles, i.e. a *"multicore@shell"* particle.
- Figure 3, is an exploded view of a porous white pigment particle having a mesoporosity and/or a microporosity with closed pores (second embodiment).
- Figure 4 is an exploded view of a porous white pigment particle having an interconnected porous network (second embodiment).

## DETAILED DESCRIPTION OF PARTICULAR EMBODIMENTS.

The ink compositions according to the invention comprise the ingredients, constituents, recited above.

Generally, the pigment (core-shell white pigment particles such as the core shell $TiO_2$ particles or the porous white pigment particles, described above) is firstly either *in-situ* coated with the dispersant during the pigment preparation process or coated by dispersant after the formation of the pigment using wet milling / dispersing processes and generally kept in suspension in the solvent before to be mixed with the other component of the ink.

The ink composition according to the invention (first embodiment) comprises core shell white pigment particles each comprising one core particle or more and a white pigment, e.g. a titanium dioxide, shell.

As shown on Figure 1, the core-shell particles may comprise only one core particle (1), surrounded by a white pigment layer, e.g. a titanium dioxide layer (2). These core-shell particles could be named *"core@shell"* particles.

As shown on Figure 2, when the core-shell particles comprise more than one core particles, i.e. several core particles (3) surrounded by a white pigment, e.g. titanium dioxide, embedded in a white pigment, e.g. titanium dioxide (4), they could then be named *"multi-core@shell"* particles.

The ink composition according to the invention (second embodiment) comprises porous white pigment particles each having a mesoporosity and/or a microporosity with closed pores; or white pigment particles each having a mesoporosity and/or a microporosity forming an interconnected porous network.

Figure 3 describes a porous white pigment particle having a mesoporosity and/or a microporosity with closed pores (5), holes, voids defined in the white pigment (6). Said holes (5) may be filled with a gas such as air or may simply be empty and not containing any gas. Said closed pores (5) are generally of a spherical or spheroidal shape.

Figure 4 shows a porous white pigment particle having an interconnected porous network (7) defined in the white pigment (8). Said network (7) may be filled with a gas such as air or may simply be empty and not containing any gas. The pores that are interconnected are generally of a spherical or spheroidal shape.

A method for the preparation of the core-shell particles included in the ink composition according to the invention will now be described.

Methods for preparing core-shell particles are well-known in the art and any of these methods can successfully be used to produce the core-shell particles included in the ink composition according to the invention.

For example, the core shell particles may be prepared by the methods disclosed in documents [1] and [2]. Methods for forming hollow core particles to be included in the core-shell particles are also disclosed in Document [2].

A review of the various methods that may be used to produce the core-shell particles used in the ink composition according to the invention, is disclosed in the Chemical Society Review (Chem. Soc. Rev., 2015, 44, 7540-7590).

Preferably, so called bottom-up processes are used to produce the core-shell particles used in the ink composition according to the invention.

- More precisely, for producing the organic core(s):

  *"The basic strategy of polymerization involves formation of 3D network-like structures via addition of several units of appropriate monomeric substrates with key functionalities. Although organic cores are often synthesized first, organic shells can also be prepared in situ. Additionally, surface modifiers, such as surfactants, polyelectrolytes, etc., can be used to improve the coating efficiency and stability."* (Chem. Soc. Rev., 2015, 44, 7540-7590).
  Controlled polymerization for example (not limited to these processes) by using Dispersion Polymerization (e.g. Journal of Polymers, vol. 2013, Article ID 754687), emulsion polymerization (Material Matters 2008, 3.1, 13.), by slow precipitation of polymer (Sci. Rep. 4, 5902 (2014)) can be used.

- For synthetizing the inorganic core or shell, the following processes can be used (however the processes that can be used are not limited to the processes listed below): via hydrolysis/condensation of metal alkoxides (Langmuir 2001, 17, 3579-3585), by precipitation, solvothermal processes, deposition, or Sol-gel methods (Stöber method), Template assisted fabrication (Ceramics International Volume 39, Issue 6, August 2013, Pages 6631-6636, Microporous and Mesoporous Materials 123 (2009) 349-353), Layer-by-layer synthesis (J Porous Mater (2010) 17:297-303), atomic layer deposition (J. Am. Chem. Soc. 2013, 135, 5541-5544).

- For producing the porous particles, the following processes can be used (however the processes that can be used are not limited to the processes listed below):

- Sol-gel synthesis (J. AM. CHEM. SOC. 2010, 132, 4438-4444), template-assisted synthesis (CHEM. COMMUN., 2003, 1080-1081), solvothermal process (J. AM. CHEM. SOC. 2010, 132, 4438-4444), soft template synthesis such as emulsion or gas bubble templates (Adv. Mater. 2008, 20, 3987-4019), Ostwald ripening method (Adv. Mater. 2008, 20, 3987-4019).

Top-down processes can also be used. *""Top-down" approaches are possible, in which external controls like microfabrication techniques, mechanical stress, etc. are utilized to break down the bulk materials to obtain the desired nanomaterials with desired shapes and sizes, "* (Chem. Soc. Rev., 2015, 44, 7540-7590).

The invention will now be described in connection with the following examples given as illustrative and non-limitative purposes.

Thus, by way of a non-limitative example, core shell titanium dioxide ($TiO_2$) particles each comprising one single polymeric core particle and a titanium dioxide shell (see Figure 1) are synthetized by one of the methods disclosed above.

The core particles have an average diameter of 100 nm, 150 nm and 200 nm.

The core shell particles have all an average diameter of 280 nm.

The polymeric core has a density from 0.5 to 2.0, for example 1.5, depending on the polymer nature. The shell, made of $TiO_2$, has a density of 4.2.

For comparison purposes, $TiO_2$ particles (density 4.2) without any core (i.e. solid titanium dioxide particles), having the same diameter (280 nm) are synthetized by a known method.

The core shell particles with a polymer core, which density is 1.5, and the $TiO_2$ particles are mixed with a solvent, a binder, a dispersant and possible other components to form an ink.

In the alternative, the core shell particles with a polymer core, which density is 1.5, and the $TiO_2$ particles are simply mixed with a solvent, and a dispersant to form a dispersion, suspension.

The relative sedimentation rate of the core shell particles and of the solid $TiO_2$ particles are measured in both the ink and the dispersion using the following apparatuses:

- Turbiscan™, which uses Static Multiple Light Scattering.

- LUMIFuge®, which is an analytical centrifuge that measures instantaneously the extinction of transmitted light across the full length of the sample (accelerated sedimentation).

The theoretical densities, and the relative sedimentation rates of the core shell particles and of the solid $TiO_2$ particles are given in Table 1 below.

Table 1: Polymer@$TiO_2$ core shell particles and solid $TiO_2$ particles with the associated theoretical density and relative sedimentation rate (in both the ink and the suspension) depending on the core diameter (for 280 nm polymer@$TiO_2$ core shell particles).

| Polymeric core diameter | Theoretical density (if $d_{polymer}$ = 1.5) | Relative sedimentation rate in both the ink and the suspension |
|---|---|---|
| No core | 4.2 | 100 |
| 100 nm | 4.1 | 96 |
| 150 nm | 3.8 | 87 |
| 200 nm | 3.2 | 69 |

This table clearly demonstrates that the core shell particles used in the ink compositions according to the invention, have a lower density and a lower sedimentation rate than solid $TiO_2$ particles while keeping the same opacity and possibly, generally, the same diameter.

Moreover, because said core shell particles comprise a core that is insoluble in the organic solvent of the ink composition, they have a high mechanical strength and they can resist the high shear they undergo many times in the printhead of the *"CIJ"* printer, in the filter of the *"CIJ"* printer, or the ball milling process for dispersing the core shell particles in the solvent. Thus, these core-shell particles are suitable for a successful use in the *"CIJ"* printing technique while providing higher ink stability in the ink cartridge as well as in the printer, while maintaining required opacity, and giving good printing quality on various substrates.

In the same way the porous white pigment ($TiO_2$) particles used in the ink compositions according to the invention, have a lower density and a lower sedimentation rate than solid $TiO_2$ particles while keeping the same opacity and possibly, generally, the same diameter

Moreover, because said porous white pigment particles comprise a specific porosity, they have a high mechanical strength and they can resist the high shear they undergo many times in the printhead of the *"CIJ"* printer, in the filter of the *"CIJ"* printer, or the ball milling process for dispersing the porous white pigment particles in the solvent. Thus, these porous white pigment particles are suitable for a successful use in the *"CIJ"* printing technique while providing higher ink stability in the ink cartridge as well as in the printer, while maintaining required opacity, and giving good printing quality on various substrates.

**Claims**

1. A non-aqueous opaque ink composition for the continuous deflected ink jet (*"CIJ"*) printing technique, liquid at room temperature, comprising:

   a) a solvent;
   b) white pigment particles,
   c) a binder, comprising one or more binding resin(s);
   d) a dispersant;
   wherein:

   - the solvent consists of one or more organic solvent compound(s);
   - the white pigment particles are core shell and/or porous white pigment particles, each particle having a density lower than the density of a non-porous, coreless white pigment particle.

2. A non-aqueous opaque ink composition according to claim 1, wherein the white pigment particles are core shell white pigment particles each comprising at least one core particle and a white pigment shell, and wherein the core shell white pigment particles each comprises at least one core particle made of a material insoluble in the solvent and having a density lower than the density of the white pigment of the shell.

3. A non-aqueous opaque ink composition according to claim 1, wherein the white pigment particles are porous white pigment particles, and wherein

   - the porous white pigment particles each have a mesoporosity and/or a microporosity with closed pores; and/or
   - the porous white pigment particles each have a mesoporosity and/or a microporosity forming an interconnected porous network.

4. Ink composition according to any one of claims 1 to 3 , wherein the white pigment is selected from C.I. (Colour Index) Pigment Whites, such as C.I. Pigment White 5 (Lithopone, mixture of barium sulphate and zinc sulphide), 6 (Titanium Dioxide $TiO_2$), 12 ($ZrO_2$), 18 (chalk), and 21 ($BaSO_4$).

5. The ink composition according to any one of the preceding claims, wherein the white pigment particles have an average particle diameter from 50 nm to 5000 nm, preferably from 100 to 700 nm, more preferably from 200 to 600 nm.

6. The ink composition according to any one of claims 1, 2 and 4, wherein the single core particle, in the core shell particles comprising only one core particle, have an average particle diameter from 10 nm to 3000 nm, preferably from 100 to 500 nm, more preferably from 100 to 400 nm, for example 150 nm or 200 nm; and wherein the core particles, in the core shell particles comprising several particles have an average particle diameter from 10 nm to 500 nm, preferably from 20 to 100 nm.

7. The ink composition according to any one of claims 1, 2, and 4, 5 wherein the material of the core particles has a density from 0.5 to 3.0, preferably from 0.5 to 2.0, more preferably from 1 to 1.5 $kg/m^3$.

8. The ink composition according to any one of the preceding claims, wherein the white pigment, such as titanium dioxide, is in a non-crystalline form, or in a partially crystalline form, or in a fully crystalline form.

9. The ink composition according to any one of claims 1, 2, and 4 to 8, wherein the material of the core particles is selected from the group consisting of organic polymers, minerals, metal oxides, metalloid oxides, and mixtures thereof.

10. The ink composition according to any one of the preceding claims wherein the white pigment particles are highly monodispersed particles centered on one specific particle size, with a narrow particle size distribution, with a polydispersity index below 0.3, preferably below 0.1; the particle size is preferably centered on one specific particle size from 200 to 600 nm, for example such specific particle size is 300, 350, 400, 450, 500 or 550 nm.

11. The ink composition according to any one of the preceding claims, wherein the dispersant is selected from the group consisting of tannic acid, citrate esters, polyvinylpyrrolidone, vinyl-alcohol resins, vinyl-acetate resins, ester resins, cellulose polymers, polyurethanes, vinylic, phenolic, (meth) acrylic polymers, acrylic acid/methacrylic acid or maleic acid copolymers, acrylamide-based resins, amphiphilic block copolymers, polyalkyleneimines, polymeric alkoxylates, phosphodiester resins, and silane coupling agents ; all copolymers containing at least one of the above polymers; and mixtures and combinations thereof; the polymers, copolymers and resins have preferably a Mw from 1000 to 50000 Da, more preferably from 1000 to 10000 Da.

12. The ink composition according to any one of the preceding claims, wherein the white pigment particles are present in an amount from 0.5% to 30% by weight, preferably from 1% to 15% by weight, more preferably from 2% to 10% by weight of the total weight of the ink composition.

13. Ink composition according to any one of the preceding claims, in which the solvent represents from 20 to 99% by weight, preferably from 30 to 95% by weight, more preferably from 30 to 90% by weight, even more preferably from 60 to 80% by weight of the total weight of the ink composition.

14. Ink composition according to any one of the preceding claims, in which said organic solvent compound(s) of the solvent is (are) selected from among alcohols, particularly low molecular weight alcohols, for example aliphatic alcohols such as ethanol, propanol-1, propanol-2, n-butanol, butanol-2; ketones preferably with a low molecular weight; alkylene glycols ethers; alkylene glycols esters and esters of alkylene glycols ethers such as acetates; dimethyl formamide; N-methyl pyrrolidone; acetals; esters; linear or cyclic ethers; aliphatic, cyclic or linear hydrocarbons; aromatic hydrocarbons; and carbonates such as propylene carbonate, ethylene carbonate and dimethyl and diethylcarbonates; and mixtures thereof.

15. Method for marking a substrate, support or object by spraying an ink composition onto this substrate, support or object using a continuous deflected ink jet (*"CIJ"*) printing technique, **characterised in that** the sprayed ink composition is a non-aqueous opaque ink composition according to any one of claims 1 to 14.

16. Substrate, support or object **characterised in that** it is provided with a marking obtained by drying and/or absorption of the opaque grey ink jet ink composition according to any one of claims 1 to 14; preferably, the substrate, support or object is made of metal, for example of iron, aluminium, or steel; of glass; of ceramic; of a material containing cellulose such as cellophane, paper, possibly coated or glazed, cardboard or wood; of an organic polymer, particularly of a thermoplastic polymer (plastic), for example chosen from among PVDCs, PVCs, polyesters, PETs, polyolefins, such as polyethylenes (PE) or polypropylenes (PP); of polymethyl methacrylate PMMA ("Plexiglas"); of fabric; of natural rubber (NR) or synthetic rubber such as styrene butadiene rubber (SBR), PI rubber, polybutadiene rubber (PB), and ethylene propylene diene monomer (EPDM) rubber; or of any other non-porous or porous substance; or of a composite of several of the above materials.

FIG.1

FIG.2

FIG.3

FIG.4

Europäisches
Patentamt

European
Patent Office

Office européen
des brevets

**EUROPEAN SEARCH REPORT**

Application Number

EP 21 20 7006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/126006 A1 (SUN CHEMICAL CORP [US]) 27 June 2019 (2019-06-27) * examples; tables * | 1-16 | INV. C09D11/36 C09D11/322 C09D11/10 |
| X,D | US 2019/194482 A1 (YAMAZAKI SOICHI [JP] ET AL) 27 June 2019 (2019-06-27) * examples 14,27,28,47,48; tables * | 1-16 | |
| X | EP 3 623 041 A1 (NIPPON KAYAKU KK [JP]) 18 March 2020 (2020-03-18) * paragraph [0060] - paragraph [0062]; examples * | 1-16 | |
| X | WO 2015/047306 A1 (HEWLETT PACKARD DEVELOPMENT CO [US]) 2 April 2015 (2015-04-02) * examples * | 1-16 | |
| X | US 2016/222244 A1 (KAGATA TAKAYOSHI [JP] ET AL) 4 August 2016 (2016-08-04) * paragraph [0095]; claims; examples * | 1-16 | |

TECHNICAL FIELDS
SEARCHED (IPC)

C09D

The present search report has been drawn up for all claims

| Place of search | Date of completion of the search | Examiner |
|---|---|---|
| Munich | 7 April 2022 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 7006

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2022

| Patent document cited in search report | | Publication date | Patent family member(s) | | Publication date |
|---|---|---|---|---|---|
| WO 2019126006 | A1 | 27-06-2019 | EP | 3728489 A1 | 28-10-2020 |
| | | | US | 2021079237 A1 | 18-03-2021 |
| | | | WO | 2019126006 A1 | 27-06-2019 |
| US 2019194482 | A1 | 27-06-2019 | NONE | | |
| EP 3623041 | A1 | 18-03-2020 | CN | 110582347 A | 17-12-2019 |
| | | | EP | 3623041 A1 | 18-03-2020 |
| | | | JP | WO2018207751 A1 | 11-06-2020 |
| | | | US | 2020056060 A1 | 20-02-2020 |
| | | | WO | 2018207751 A1 | 15-11-2018 |
| WO 2015047306 | A1 | 02-04-2015 | BR | 112016006612 A2 | 01-08-2017 |
| | | | CN | 105593312 A | 18-05-2016 |
| | | | EP | 3049482 A1 | 03-08-2016 |
| | | | US | 2016221836 A1 | 04-08-2016 |
| | | | US | 2018072585 A1 | 15-03-2018 |
| | | | WO | 2015047306 A1 | 02-04-2015 |
| US 2016222244 | A1 | 04-08-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060275606 A1
- US 20190194482 A1
- WO 2012120088 A2
- US 2014065381 A1

### Non-patent literature cited in the description

- *Chem. Soc. Rev.,* 2015, vol. 44, 7540-7590
- *Journal of Polymers,* vol. 2013
- *Material Matters,* 2008, vol. 3.1, 13
- *Sci. Rep.,* 2014, vol. 4, 5902
- *Langmuir,* 2001, vol. 17, 3579-3585
- *Ceramics International,* August 2013, vol. 39 (6), 6631-6636
- *Microporous and Mesoporous Materials,* 2009, vol. 123, 349-353
- *J Porous Mater,* 2010, vol. 17, 297-303
- *J. Am. Chem. Soc.,* 2013, vol. 135, 5541-5544
- *J. AM. CHEM. SOC.,* 2010, vol. 132, 4438-4444
- *CHEM. COMMUN.,* 2003, 1080-1081
- *Adv. Mater.,* 2008, vol. 20, 3987-4019